# EUROPEAN PATENT APPLICATION

(11) **EP 2 689 963 A1**
(43) Date of publication of application: **29.01.2014**
(21) Application number: 12005465.5
(22) Date of filing: 26.07.2012
(51) Int. Cl.: B60P 3/22, F17C 13/08

(54) **Integrated bogie frame and tank structure**

(71) Applicant: Linde Aktiengesellschaft, 80331 München (DE)
(72) Inventor: Bergqvist, Martin, 42668 Västra Frölunda (SE); Jonson, Lars, 414 62 Göteborg (SE); Lorentsson, Kristoffer, 41663 Göteborg (SE)
(74) Representative: Zahn, Christoph

(57) **Abstract**

Integrated bogie frame and tank device comprising a bogie frame (110) and a tank (120), wherein the bogie frame (110) comprises a plurality of wheels (112, 113) and a support structure (130) for supporting the plurality of wheels, and wherein the tank (120) forms part of the support structure (130) of the bogie frame (110).

## Description

### Field of the invention

The present invention relates to the transport of cryogenic fluids in cryogenic tanks or trailers.

### Background of the invention

Cryogenic tanks are designed for storage and transport of liquid gases. Cryogenic tanks are essentially double walled cylindrical tanks, wherein a corresponding space between an inner shell and an outer shell (vacuum jacket) is filled with an insulating material and evacuated to a high vacuum to achieve minimum evaporation losses.

For transportation of such cryogenic tanks, it is known to provide bogie frames, comprising for example four or six wheels, two or three of which are arranged on either side of a support structure. These two sides are connected by a support structure comprising crosslink members and other supporting elements as well as axles provided between respective corresponding wheels on both sides of the frame to provide sufficient stability for the bogie frame.

All in all, the construction of such bogie frames is cumbersome, as numerous components must be attached to one another, i. e. usually welded together. Also the cryogenic tanks must be safely attached to the bogie frames, leading to added cost and effort. A further disadvantage of such bogie frames according to the prior art lies in the fact that cylindrical cryogenic tanks supported by these frames have a relatively high center of gravity, rendering the structure liable to instability.

The present invention seeks to overcome the disadvantages associated with prior art systems.

The present invention thus suggests an integrated bogie frame and tank device comprising the features of claim 1.

According to the invention, the tank forms part of the support structure of the bogie frame. This reduces the number of components of the system as a whole, as e.g. crosslink members linking the two sides (i.e. the left and right sides) of the bogie frame can, at least partly, be dispensed with, as the tank contributes to the structural stabilisation of the support structure of the bogie frame. Thus, the support structure of the bogie frame can be provided in a more lightweight fashion, compared to previous solutions.

Such an integrated structure can thus be provided with substantially less weight than previous solutions, in which a complete bogie frame and, additionally, a complete tank had to be provided, and then securely attached to one another. The present invention thus provides a synergistic effect in that the cylindrical tank is also used as a supporting member within the support structure of the bogie frame.

A further advantage lies in the fact that hereby the center of gravity of the system as a whole can be lowered.

Advantageous embodiments are the subject matter of the dependent claims.

According to a preferred embodiment, the tank is a cryogenic vessel comprising an outer shell and an inner shell. Between the shells, vacuum means are provided. Such cryogenic vessels are manufactured with an enhanced stability, e.g. provided with additional stiffening or support rings. This stability can be advantageously be utilised when simultaneously forming part of the bogie frame.

According to a preferred embodiment, the tank is of a generally cylindrical shape. Such shapes are easy to manufacture, and provide a constant stability over the whole length of the tank, so that for example a front and a rear bogie frame or bogie frame section can be constructed in essentially the same way.

According to a preferred embodiment, the bottom edge of the tank is, in a vertical direction, provided at the same height or lower than the top edge of the wheels of the bogie frame. Especially in case of a cylindrical shape of the tank, this measure provides a low center of gravity, whereby stability of the structure as a whole is enhanced.

It should be noted that the previously mentioned features and the features to be further described in the following are usable not only in the respectively indicated combination, but also in further combinations or taken alone, without departing from the scope of the present invention.

In the drawings:
Figure 1 shows a perspective view of a first preferred embodiment of the present invention,
Figure 2 is a front or axial view of the embodiment of Figure 1,
Figure 3 is a further perspective view of a detail of the embodiment of Figure 1,
Figure 4 shows a cut out section similar to figure 1, of a second preferred embodiment of the invention, and
Figure 5 is a more general side view of the embodiment of Figure 2,

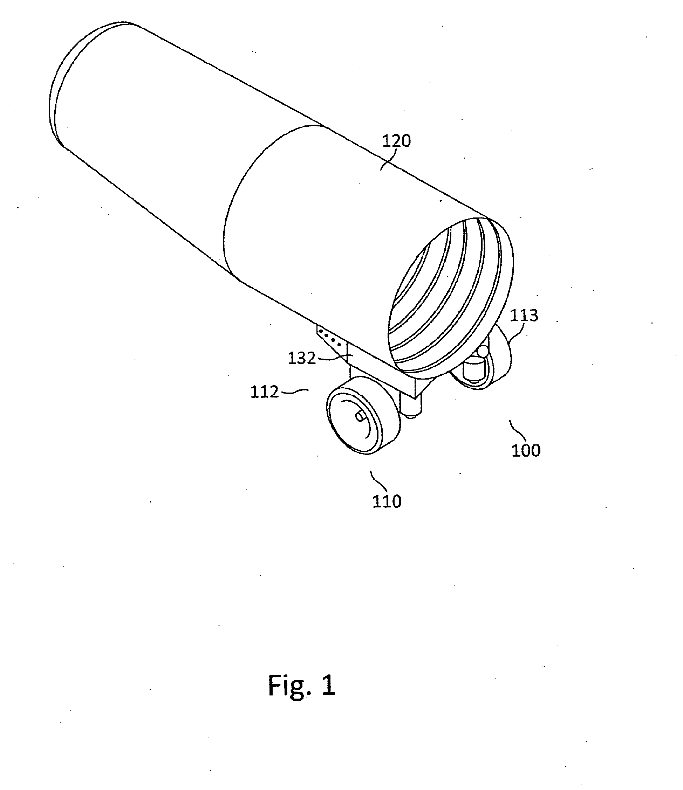

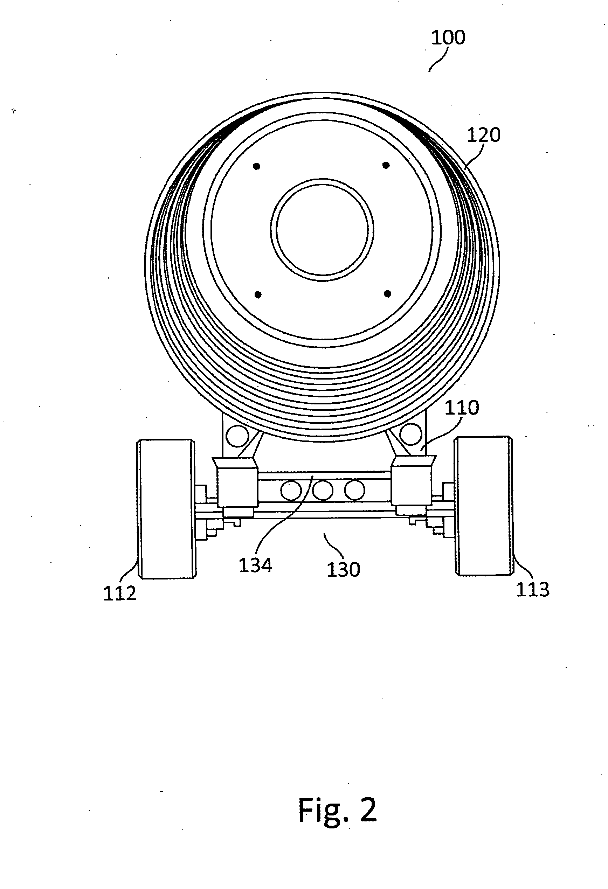

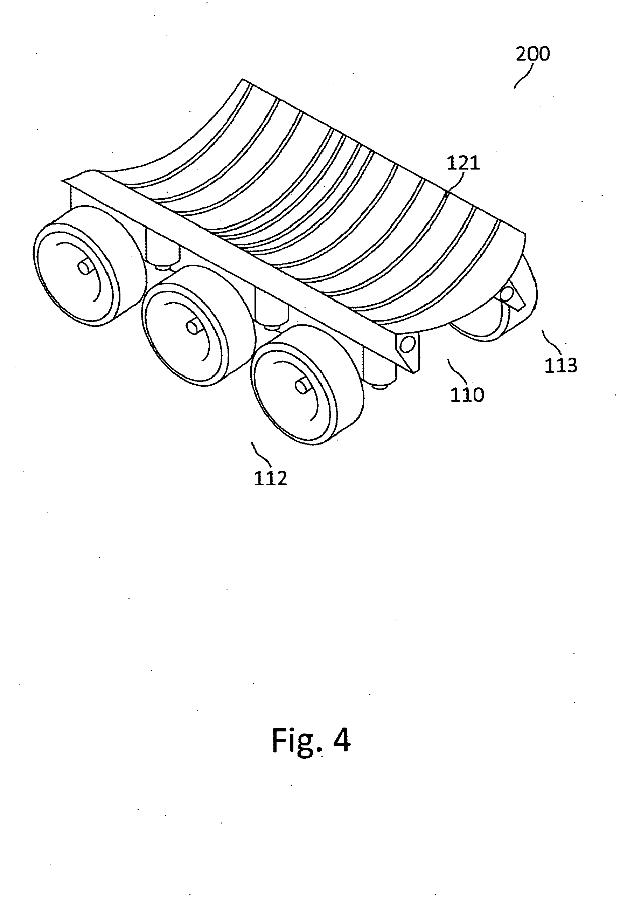

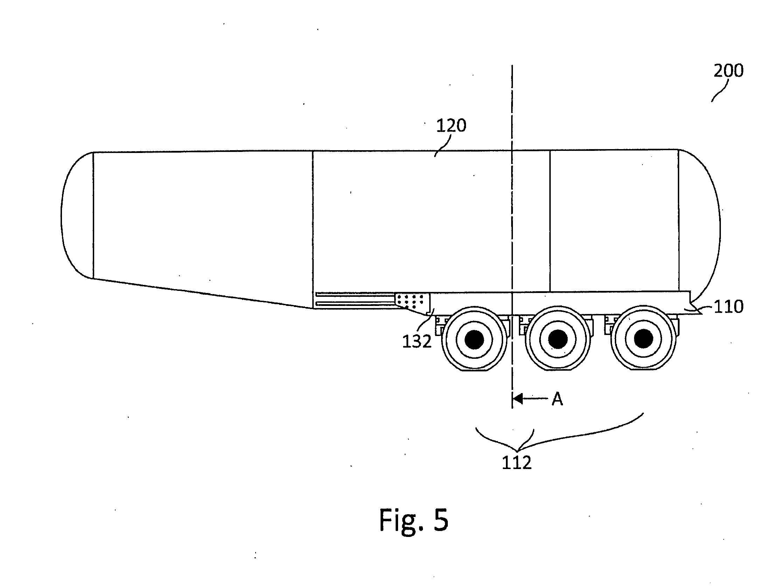

A first preferred embodiment of the device according to the invention is designated 100 in figures 1 to 3, and 200 in figures 4 and 5. The device 100 comprises a bogie frame 110 and a cryogenic vessel (tank) 120. The tank 120 is provided with an inner and an outer shell, of which, for reasons of clarity, only the outer shell is shown. The inner shell and/or the outer shell are provided with stiffering rings 121.

The bogie frame 110 comprises two wheels 112, 113, one on each side of the bogie frame 110. The wheels are connected by an axle 150. Wheels 112, 113 thus constitute a pair of wheels connected by axle 150. It is also possible to provide the bogie frame with two; three, four or more of such pairs of wheels, each pair being provided with a corresponding axle.

Support structure elements are generally designated 130 in the figures. These support structure elements comprise longitudinal (chassis) beams 132, cross link members 134, dampers 136 as well as suspension arms 138.

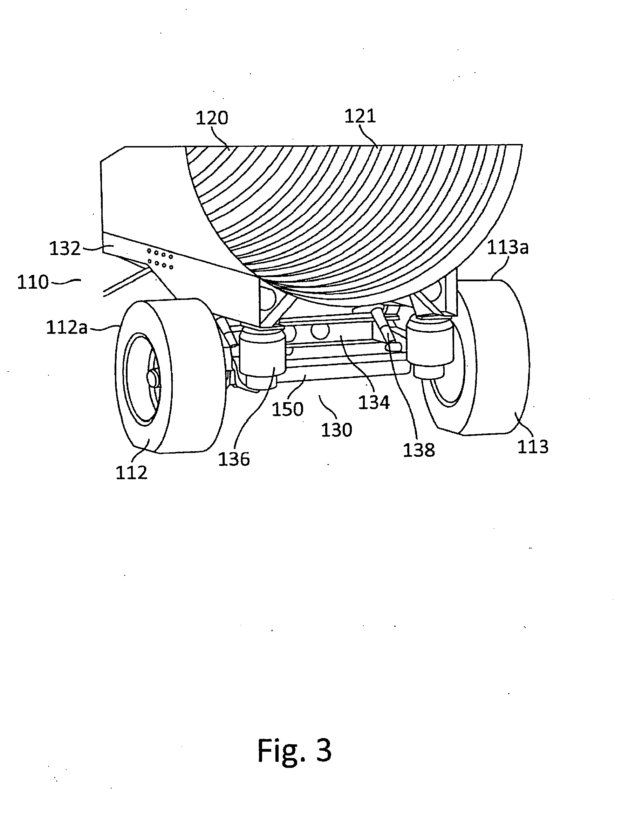

As can especially be seen in Figure 3, the longitudinal beams 132 are welded to the tank 120 at two lower sides of the tank 120. The longitudinal beams 136 rest on dampers 136 which are connected to further members, such as the cross link members 134 and the suspension arms 138. Thus, the tank 120 forms a part of the support structure of bogie frame 110.

Be it noted that, according to the invention, cross link member 134 can be completely omitted, as lateral stability of the support structure is provided by the tank 120. However, in the shown embodiment, a cross link member, which can typically be dimensioned in a more lightweight manner compared to previous solutions, is provided, as this can provide advantages in connection with the suspension of the damper elements.

As can be seen, especially in Figure 3, the wheels 112, 113 provided on opposite sides of the support structure have such a distance from one another, that the lower edge 120a of the tank 120 lies below the top side of wheels 112, 113. Thus, the center of gravity of the device as a whole can be provided very low as compared to previous solutions.

A further embodiment 200 is shown in figure 4 and 5. Components also comprised in the first embodiment have been given the same reference numerals. Here, three pairs of wheels are provided i.e. three wheels 112, 113 on each side of the bogie frame 110. The inner and/or outer shell of tank 120 is provided with stiffening rings 121. These rings contribute to the stability of the tank, and, according to the invention, can thus significantly contribute to the stability of the inventive device.

## Claims

1. Integrated bogie frame and tank device comprising a bogie frame (110) and a tank (120), wherein the bogie frame (110) comprises a plurality of wheels (112, 113) and a support structure (130) for supporting the plurality of wheels, and wherein the tank (120) forms part of the support structure (130) of the bogie frame (110).

2. Device according to claim 1, wherein the tank (120) is a cryogenic vessel comprising an outer shell and an inner shell.

3. Device according to claim 1 or 2, wherein the tank is of a generally cylindrical shape.

4. Device according to any one of the preceding claims, wherein the tank, especially the outer shell and//or the inner shell, comprises stiffening rings (121).

5. Device according to any one of the preceding claims, wherein the bottom edge (120a) of the tank (120) is, in a vertical direction, provided at the same height or lower than the top edge (112a, 113a) of the wheels of the bogie frame.
